# EUROPEAN PATENT SPECIFICATION

(11) **EP 0 701 677 B1**
(45) Date of publication and mention of the grant of the patent: **29.04.1998**
(21) Application number: 93918008.9
(22) Date of filing: 11.08.1993
(51) Int. Cl.: F25D 3/00

(54) **THERMAL STORAGE DEVICE AND METHOD**
WÄRMESPEICHERVORRICHTUNG UND -METHODE
DISPOSITIF ET METHODE D'ACCUMULATION THERMIQUE

(30) Priority: 02.06.1993 GB 9311403
(43) Date of publication of application: 20.03.1996
(73) Proprietor: ACTIONENERGY LIMITED, London N1 6EE (GB)
(72) Inventor: GOMEZ, Enrique, Llorente, Calle Despenaperros, Colmenar Viejo E-28790 Madrid (ES)
(74) Representative: Cozens, Paul Dennis
(86) International application number: GB9301710
(87) International publication number: WO9428319

(56) References cited:
- EP-A- 0 427 648
- DD-A- 213 643
- DE-A- 3 614 731
- DE-A- 4 023 781
- US-A- 4 434 623
- US-A- 4 484 448

## Description

The present invention relates to a container such as a bulk transportation container, particularly one including a thermal storage device, and especially a thermal storage device for refrigerating foodstuffs and other perishables. The invention also relates to a thermal transfer system and to a method of storing heat or cold in a container.

Large amounts of foodstuffs are transported in bulk transportation containers, both by road, rail, sea and airfreight. It is well known that for correct and optimal conservation of a foodstuff during transportation and storage, it is important that the temperature and relative humidity of the ambient medium in which the foodstuff is stored is maintained as closely as possible at a precise predetermined level. This level depends on the type of foodstuff to be conserved.

Commonly, refrigeration units are utilised for the conservation of foodstuffs being transported in bulk transportation containers. Both electrically and diesel powered units are known. Whilst such units permit control of the temperature at which a foodstuff is maintained, they suffer from the disadvantages of high operating and maintenance costs, temperature and relative humidity fluctuations that may cause withering or blemishing of the foodstuff, and of the foodstuff perishing when they fail. Failure is common. Since such units are continuously subject to vibration and impact, loss of small quantities of freon gas or CFC mixtures harmful to the environment may be common.

It is also known to utilise ice for the refrigeration of foodstuffs in bulk transportation containers. This has several disadvantages. Firstly, rapid deterioration of the foodstuff may occur if it comes into contact with the ice, especially when the ice melts, when rotting may occur. Secondly, this technique is not capable of quickly lowering the temperature of the foodstuff, particularly when it has been loaded directly into the container at ambient temperature without prior refrigeration. Thirdly, conservation of foodstuffs at a temperature different from that of melting ice is impossible.

Further, it is known to store water or some similar substance in a so-called "freezer-pack", as a type of thermal storage device. Such a pack is cooled in a domestic freezer and then used in conserving small quantities of foodstuffs in picnic boxes or the like. Whilst such a pack solves some of the problems encountered when using just ice to conserve foodstuffs, it would be expected to be inconvenient and impractical if used on a much larger scale with bulk transportation containers.

DE-A-3614731 discloses a similar system to that described in the previous paragraph. A cold storage device is cooled by connection to a stationary refrigeration unit, and, once cooled, is inserted into the load space of a container which it is desired to keep cool.

DE-A-4023781 discloses a cooling process in which a coolant recooler, partially filled with a cooling fluid, is cooled, in a first process step, to such a low temperature that the thus-produced and stored amount of cold is sufficient for cooling, in a subsequent process step, the coolant of a heat-producing, water-cooled apparatus to be connected, during its operating period. The coolant recooler is movable and connectible, for cooling purposes, to the coolant circuit of the apparatus. During the cooling operation, no active refrigerating machine is in operation. After termination of the cooling operation, the coolant recooler is uncoupled from the apparatus, transported away, and subsequently its cooling fluid is recooled.

The present invention seeks to solve the above described problems.

Apparatus and method aspects of the present invention are defined in Claims 1 and 9 respectively.

Preferably, there is provided a thermal storage device comprising a thermal storage medium and a coupling arrangement for permitting thermal transfer between the medium and a thermal source at a location separate from that of the bulk of the medium, so as to change the temperature of the medium, the coupling arrangement being arranged to permit releasable coupling between the medium and the source.

By means of a coupling arrangement which is arranged to permit releasable coupling between the medium and the source, the thermal storage medium can be cooled or heated ("charged") in situ in the container by being coupled to a remote, or at least separate, thermal source. Once the storage medium has been charged thus, the thermal storage device can be uncoupled from the thermal source and the container transported away.

This arrangement can have the advantages of being economical to install and maintain, convenient to use, and also highly reliable. In particular, once the medium has been charged, it need not be re-charged or attended to in any way whilst the container is being transported, until the storage medium finally "runs out". Further, the device need have no mechanical moving parts. Operating costs would be incurred only by the charging of the container by the thermal source, which would typically be an entirely conventional refrigeration unit kept at a depot. Hence the refrigeration unit would also be relatively easy to operate and maintain by comparison with a mobile refrigeration unit carried with the container, which is continuously subject to vibration, loss of small quantities of freon gas or CFC mixtures harmful to the environment, impact, and consequent necessity for repair.

An important practical advantage of the container of the present invention is that, because it may completely obviate the need for refrigeration machinery using freon gas or "CFC" mixtures, the device may conform to international standards which in the future might completely ban the use of such polluting and ozone layer depleting substances.

Preferably, the container, in which the thermal storage medium is kept, is sealed. This can prevent contamination of the foodstuff by the medium.

The coupling arrangement includes a heat exchange device for exchanging heat between thermal transfer fluid carried from the thermal source by the coupling arrangement and the thermal storage medium. This arrangement has the advantages firstly that the thermal storage medium need not be bodily moved during the charging process (for instance, by being pumped from the thermal source to the thermal storage device). Hence it can easily be kept in a sealed container. Secondly, this arrangement allows the thermal transfer fluid and thermal storage medium to be different substances. Thus, for example, the thermal transfer fluid is still able to be in the liquid phase whilst it is being pumped from the thermal source through the heat exchange device, whilst the medium may be changing phase from liquid to solid.

For optimum efficiency, the heat exchange device is in direct contact with the medium.

Preferably, the thermal storage medium consists of a substance which changes phase at a selected temperature. By using a phase change substance, the thermal storage device can accurately maintain the selected temperature (and hence also a selected relative humidity) for a considerable period of time. Since the device is advantageously used for refrigeration, the selected temperature is preferably less than 50°C, more preferably less than 20 or 30°C, even more preferably less than 5 or 10°C. In many circumstances the temperature is preferably 0°C or lower than 0°C.

The container may suitably be a bulk storage container or the container on a panel body vehicle, and may include a thermal storage device as aforesaid, the coupling arrangement of the thermal storage device being arranged to permit releasable coupling of the container and a thermal source external to the container. Thus, once the thermal storage device has been charged, the container can be uncoupled from the source and used completely autonomously.

For an even distribution of heat or cold within the container, preferably a plurality of thermal storage devices are provided, disposed about the container. In this event, the coupling arrangements of the thermal storage devices preferably share a common coupling arrangement at their ends remote from their respective thermal storage media. This facilitates charging of the thermal storage device, since the thermal source can be coupled to a single common coupling arrangement.

For ease of coupling to the thermal source, the or each coupling arrangement suitably terminates at its end remote from its thermal storage medium at the exterior of the container.

The container may further include an insulating arrangement for insulating the load space.

The invention extends to a thermal transfer system including a thermal storage device or a container as aforesaid, and a thermal source at a location separate from that of the bulk of the thermal storage medium.

A preferred embodiment of the invention is now described, by way of example, with reference to the accompanying drawings, in which:-
Figure 1 is a part sectional perspective view of a container incorporating a number of thermal storage devices,
Figure 2 is a similar view showing one particular thermal storage device at an enlarged scale; and
Figure 3 is a schematic representation of a fluid circuit incorporating the thermal storage devices.

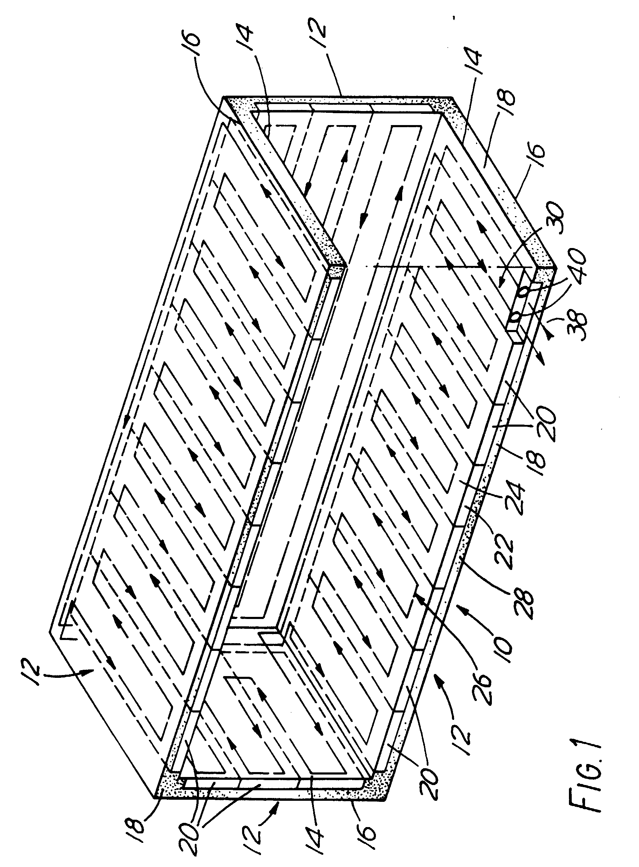

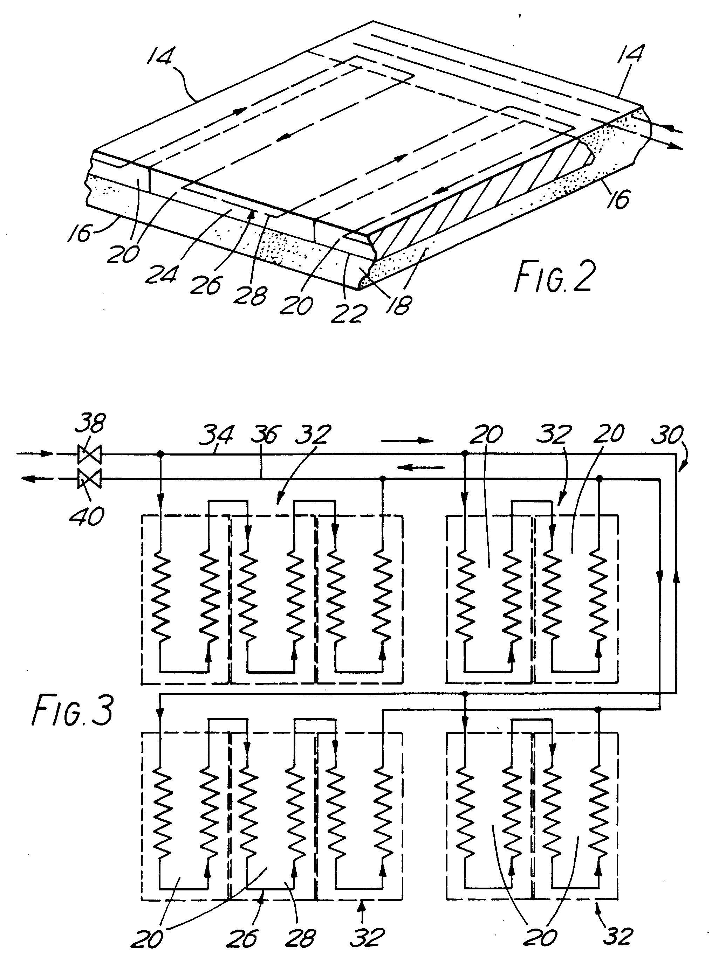

Referring to Figures 1 and 2, a container 10 according to the present invention has the dimensions of a standard bulk transportation container. The container comprises five panels 12 (namely two side panels, a floor panel, a roof panel and one end panel) defining a load space, and an aluminium or steel framework supporting the panels (not shown). One end of the container is provided with access doors (also not shown). Each of the five panels 12 is of a sandwich construction, and comprises inner and outer thin metal sheets 14 and 16 (shown for clarity as having no thickness) between which is sandwiched a thick layer of high density polyurethane insulation 18 (shown by the cross-hatching in Figure 1 and by the dots in Figure 2) and thermal storage devices 20.

As shown in Figures 1 and 2, each thermal storage device 20 includes a rectangular cross-section container 22 containing thermal storage medium 24 and a heat exchange device 26.

In more detail, each rectangular cross-section container 22 is located immediately below the inner sheet 14 of the relevant panel 12, and contiguous with its neighbouring containers 22. This ensures an efficient release of thermal energy from the thermal storage devices 20 which is continuous over the load space (apart from the access doors, which are not provided with thermal storage devices). The container is made by an extrusion process from aluminium alloy (although other materials may also be suitable). It will be understood that the cross-sectional shape of the rectangular cross-section container 22 need not be perfectly rectangular; considerations of low specific weight and high mechanical strength may dictate somewhat different profiles.

The thermal storage medium 24 in each container 22 is a ternary or quaternary aqueous solution, for example, a brine solution having a freezing/melting point of -20°C, and hence in this embodiment functions with container 22 as a thermal cold storage device.

Each heat exchange device 26 comprises a portion of a meandrine conduit 28, the same conduit being shared by a number of contiguous thermal storage devices 20. The conduit extends through the rectangular cross-section containers 22 and hence is in direct contact with the thermal storage medium 24.

Referring now to Figure 3, the heat exchange devices 26 form part of a fluid circuit 30 carrying thermal transfer fluid. The thermal transfer fluid is typically of the same media 24 have completely changed phase from liquid to solid. It will be appreciated that the refrigerated fluid needs to remain in the fluid state at temperatures at and below the freezing point of the thermal storage media 24.

It will be understood that, for efficient charging, the flow rate of refrigeration fluid to the individual heat exchange devices 26 needs to be carefully controlled to ensure that all the thermal storage devices 20 are cooled at the appropriate rate. Such control can be pre-established during the design stage. Factors which influence the flow rate are the lengths of the conduits 28 in the panels 12, the cross-sectional areas of the inlet and outlet circuit branches to each panel (loss of head of the fluid circuit), and so on. In particular, by arranging the individual heat exchange devices 26 in series, and the individual circuits 32 in parallel, relatively uniform flow rates can be achieved in the individual heat exchange devices.

Once the thermal storage devices 20 have been charged so that the thermal storage media 24 have changed phase from liquid to solid, the valves 38 and 40 are closed to prevent loss of refrigeration fluid, and the external refrigeration unit is uncoupled. The container 10 is now ready to be transported.

Once the refrigeration unit has been uncoupled the thermal storage devices act completely autonomously, in that they do not require any further attention. They act to cool the contents of the container by natural convection and radiation from the internal walls, floor and ceiling of the container. They continue to act thus until near the time when the thermal storage media 24 have completely changed phase from solid to liquid. This time is dependent on many factors, such as the quantity of thermal storage medium, the degree of insulation of the container 10, and the external temperature to which the container is subjected. These factors would be taken into consideration at the design stage, to produce a container composition as the thermal storage medium, although having a lower freezing/melting point. The fluid circuit functions as a coupling arranged to be coupled to a cold source such as a refrigeration unit (not shown) and to effect thermal transfer between the source and the individual thermal storage media 24.

In more detail, the fluid circuit 30 comprises a number of individual circuits 32, each individual circuit itself including a number of heat exchange devices 26. For illustration purposes, four individual circuits 32 are shown in Figure 3; normally, five would be employed, one for each panel of the container. The heat exchange devices 26 within each individual circuit 32 are connected in series, although a parallel connection is possible. The individual circuits 32 are connected together in parallel, although a series connection is possible. Finally, the common flow and return conduits 34 and 36 for all the individual thermal storage devices terminate at inlet and outlet valves 38 and 40 respectively. As is clear from Figure 1, these valves are positioned on the exterior of the container 10. The valves are designed to permit easy and rapid releasable coupling of the container to the thermal cold source (not shown).

The operation of the container 10 including the thermal storage devices 20 is as follows. Before the container is used for transporting foodstuff (or perishables) the thermal storage devices 20 are charged. An external thermal cold source in the form of a refrigeration unit located at a depot is connected via a flexible conduit to the inlet and outlet valves 38 and 40.

The thermal cold storage media 24 are charged by pumping refrigerated thermal transfer fluid from the refrigeration unit via the inlet valve 38 through the fluid circuit 30 to the individual heat exchange devices 26 in the individual circuits 32. Charging is complete when the thermal storage having the requisite capabilities.

It will be understood that, since the thermal storage medium 24 is a phase change substance, once charged, the thermal storage devices 20 can maintain foodstuffs or other items such as perishables at a relatively constant temperature (the temperature at which the phase changes) for a relatively prolonged period due to the significant latent heat of fusion of the phase change substance. Hence also the foodstuffs can be maintained at a relatively constant humidity.

It will be understood that the present invention has been described above purely by way of example, and modifications of detail can be made within the scope of the invention. For example, it will be appreciated that modifications can be made to the shapes and dimensions in the drawings.

## Claims

1. A container (10) comprising a body defining a load space for the temporary storage of a load, means for affording access to the load space to enable loading and unloading of the load, a thermal storage medium (24) arranged for thermal transfer with the load space, and a coupling arrangement (26,30,32) for permitting thermal transfer between the medium and a thermal source external to the container using thermal transfer fluid, so as to change the temperature of the medium, the coupling arrangement terminating at the exterior of the container and permitting releasable coupling between the container and the source, the coupling arrangement including a heat exchange device (26) for exchanging heat between the thermal transfer fluid and the thermal storage medium and being adapted to maintain the thermal transfer fluid in the liquid phase whilst it is being pumped from the thermal source through the heat exchange device.

2. A container according to Claim 1 wherein the heat exchange device (26) is in direct contact with the medium.

3. A container according to Claim 1 or 2, comprising thermal transfer fluid, wherein the thermal transfer fluid has a lower melting point than the thermal storage medium.

4. A container according to any of the preceding claims wherein the thermal storage medium consists of a substance which changes phase at a selected temperature, said temperature being preferably less than 50°C, more preferably less than 20 or 30°C, even more preferably less than 5 or 10°C, yet more preferably O°C or lower than 0°C.

5. A container according to any of the preceding claims wherein a plurality of thermal storage devices (20) are provided, each such device containing thermal storage medium (24), the devices being disposed about the container.

6. A container according to Claim 5 wherein each thermal storage device has an individual such coupling arrangement, the individual coupling arrangements sharing a common portion (34,36) terminating at the exterior of the container.

7. A container according to Claim 5 or 6 wherein at least two such thermal storage devices (20) touch one another.

8. A thermal transfer system including a container according to any of the preceding claims, and a thermal source, the thermal source preferably being a refrigeration unit.

9. A method of storing heat or cold in a container (10), the container comprising a body defining a load space for the temporary storage of a load, means for affording access to the load space to enable loading and unloading of the load, and a thermal storage medium (24) arranged for thermal transfer with the load space, the method comprising:
providing a thermal source external to the container;
coupling the storage medium to the thermal source, whilst the storage medium is in the container, to effect thermal transfer between the medium and the source using thermal transfer fluid, whilst maintaining the thermal transfer fluid in the liquid phase, so as to change the temperature of the medium; and
subsequently uncoupling the storage medium from the thermal source.

10. A method according to Claim 9 wherein the thermal storage medium at least partially changes phase while the medium is coupled to the source.

## Patentansprüche

1. Container bzw. Behälter (10), der einen Körper, welcher einen Laderaum zur vorübergehenden Lagerung einer Ladung definiert, eine Einrichtung zur Zugriffsverschaffung zum Laderaum, um eine Be- und Entladung der Ladung zur ermöglichen, ein Wärmespeichermittel (24), das zur Wärmeübertragung mit dem Laderaum eingerichtet ist, und eine Verbindungseinrichtung (26, 30, 32) umfaßt, um eine Wärmeübertragung zwischen dem Mittel und einer Wärmequelle außerhalb des Containers unter Verwendung eines Wärmeübertragungsfluids zuzulassen, um so die Temperatur des Mittels zu ändern, wobei die Verbindungseinrichtung an der Außenseite des Containers endet und eine lösbare Verbindung zwischen dem Container und der Quelle zuläßt, und wobei die Verbindungseinrichtung eine Wärmetauscheinrichtung (26) zum Wärmetausch zwischen dem Wärmeübertragungsfluid und dem Wärmespeichermittel umfaßt und ausgelegt ist, um das Wärmeübertragungsfluid in der flüssigen Phase zu halten, während dieses von der Wärmequelle durch die Wärmetauscheinrichtung gepumpt wird.

2. Container nach Anspruch 1, bei dem sich die Wärmetauscheinrichtung (26) in unmittelbarem Kontakt mit dem Mittel befindet.

3. Container nach Anspruch 1 oder 2, der ein Wärmeübertragungsfluid umfaßt, wobei das Wärmeübertragungsfluid einen niedrigeren Schmelzpunkt aufweist als das Wärmespeichermittel.

4. Container nach einem der vorhergehenden Ansprüche, bei dem das Wärmespeichermittel aus einer Substanz besteht, die ihre Phase bei einer ausgewählten Temperatur ändert, wobei die Temperatur zweckmäßig weniger als 50° Celsius, vorzugsweise weniger als 20 oder 30° Celsius, noch vorzugsweiser weniger als 5 oder 10° Celsius und höchst vorzugsweise 0° Celsius oder weniger als 0° Celsius beträgt.

5. Container nach einem der vorhergehenden Ansprüche, bei dem eine Anzahl von Wärmespeichereinrichtungen (20) vorgesehen ist, wobei jede solche Einrichtung ein Wärmespeichermittel (24) beinhaltet und die Einrichtungen um den Container herum angeordnet sind.

6. Container nach Anspruch 5, bei dem jede Wärmespeichereinrichtung eine eigene solche Verbindungseinrichtung aufweist, wobei sich die eigenen Verbindungseinrichtungen einen gemeinsamen Abschnitt (34, 36) teilen, der an der Außenseite des Containers endet.

7. Container nach Anspruch 5 oder 6, bei dem sich zumindest zwei solche Wärmespeichereinrichtungen (20) gegenseitig berühren.

8. Wärmeübertragungssystem einschließlich eines Containers nach einem der vorhergehenden Ansprüche und einer Wärmequelle, wobei die Wärmequelle vorzugsweise eine Kühleinheit ist.

9. Verfahren zum Speichern von Wärme oder Kälte in einem Container bzw. Behälter (10), wobei der Container einen Körper, der einen Laderaum zur vorübergehenden Lagerung einer Ladung definiert, eine Einrichtung zur Zugriffsverschaffung zu dem Laderaum, um eine Be- und Entladung der Ladung zu ermöglichen, und ein Wärmespeichermittel (24) umfaßt, das für eine Wärmeübertragung mit dem Laderaum eingerichtet ist, welches Verfahren umfaßt:
eine Wärmequelle außerhalb des Containers wird zur Verfügung gestellt;
das Speichermittel wird mit der Wärmequelle verbunden, während sich das Speichermittel in dem Container befindet, um eine Wärmeübertragung zwischen dem Mittel und der Quelle unter Verwendung eines Wärmeübertragungsfluids zu bewirken und gleichzeitig das Wärmeübertragungsfluid in der flüssigen Phase zu bewahren, um so die Temperatur des Mittels zu ändern; und
im Anschluß daran wird das Speichermittel von der Wärmequelle getrennt.

10. Verfahren nach Anspruch 9, bei dem das Wärmespeichermittel zumindest teilweise die Phase ändert, während das Mittel mit der Quelle verbunden ist.

## Revendications

1. Conteneur (10) comprenant un corps définissant un espace de charge destiné à l'accumulation temporaire d'une charge, des moyens destinés à donner accès à l'espace de charge pour permettre la charge et la décharge de la charge, un milieu d'accumulation thermique (24) disposé pour le transfert thermique avec l'espace de charge, et un dispositif de couplage (26, 30, 32) destiné à permettre le transfert thermique entre le milieu et une source thermique externe au conteneur en utilisant un fluide de transfert thermique, de manière à changer la température du milieu, le dispositif de couplage se terminant à l'extérieur du conteneur et permettant un couplage libérable entre le conteneur et la source, le dispositif de couplage comportant un dispositif d'échange de chaleur (26) destiné à échanger de la chaleur entre le fluide de transfert thermique et le milieu d'accumulation thermique et apte à maintenir le fluide de transfert thermique en phase liquide pendant qu'il est pompé de la source thermique à travers le dispositif d'échange de chaleur.

2. Conteneur selon la revendication 1, dans lequel le dispositif d'échange de chaleur (26) est en contact direct avec le milieu.

3. Conteneur selon la revendication 1 ou 2, comprenant un fluide de transfert thermique, dans lequel le fluide de transfert thermique a un point de fusion inférieur à celui du milieu d'accumulation thermique.

4. Conteneur selon l'une quelconque des revendications précédentes, dans lequel le milieu d'accumulation thermique consiste en une substance qui change de phase à une température sélectionnée, ladite température étant de préférence inférieure à 50 °C, plus préférablement inférieure à 20 ou 30 °C, et même plus préférablement inférieure à 5 ou 10 °C, encore plus préférablement 0 °C ou inférieure à 0 °C.

5. Conteneur selon l'une quelconque des revendications précédentes, dans lequel une pluralité de dispositifs d'accumulation thermique (20) est prévue, chaque dispositif de cette sorte contenant un milieu d'accumulation thermique (24), les dispositifs étant disposés autour du conteneur.

6. Conteneur selon la revendication 5, dans lequel chaque dispositif d'accumulation thermique a un tel dispositif de couplage individuel, les dispositifs de couplage individuels partageant une partie commune (34, 36) qui se termine à l'extérieur du conteneur.

7. Conteneur selon la revendication 5 ou 6, dans lequel au moins deux dispositifs d'accumulation thermique (20) de ce genre se touchent l'un l'autre.

8. Système de transfert thermique comprenant un conteneur selon l'une quelconque des revendications précédentes, et une source thermique, la source thermique étant de préférence une unité de réfrigération.

9. Procédé d'accumulation de chaleur ou de froid dans un conteneur (10), le conteneur comprenant un corps définissant un espace de charge destiné à l'accumulation temporaire d'une charge, des moyens destinés à donner accès à l'espace de charge pour permettre la charge et la décharge de la charge, et un milieu d'accumulation thermique (24) disposé pour le transfert thermique avec l'espace de charge, le procédé comprenant les étapes qui consistent à :
prévoir une source thermique externe au conteneur ;
coupler le milieu d'accumulation à la source thermique, pendant que le milieu d'accumulation est dans le conteneur, pour effectuer le transfert thermique entre le milieu et la source en utilisant le fluide de transfert thermique, tout en maintenant le fluide de transfert thermique en phase liquide, de manière à changer la température du milieu ; et à
découpler par la suite le milieu d'accumulation de la source thermique.

10. Procédé selon la revendication 9, dans lequel le milieu d'accumulation thermique change de phase au moins partiellement pendant que le milieu est couplé à la source.
